# DEMANDE DE BREVET EUROPEEN

(11) **EP 4 517 852 A1**
(43) Date de publication de la demande: **05.03.2025**
(21) Numéro de dépôt: 24197767.7
(22) Date de dépôt: 30.08.2024
(51) Int. Cl.: H01M 4/04, H01M 10/52, H01M 50/105, H01M 50/124, H01M 50/30

(54) **ENSEMBLE COMPRENANT UNE CELLULE DE BATTERIE ET PROCÉDÉ DE RÉCUPÉRATION D'UN OU PLUSIEURS GAZ ÉMIS LORS DE LA FORMATION D'UNE BATTERIE**

(30) Priorité: 31.08.2023 FR 2309171
(71) Demandeur: Ampere SAS, 92100 Boulogne-Billancourt (FR)
(72) Inventeur: HERVE, Pauline, 78084 Guyancourt (FR); LERAY, David, 78084 Guyancourt (FR)
(74) Mandataire: Renault Group

(57) **Abrégé**

Cet ensemble (2) comprend une cellule (4) de batterie munie d'électrodes (10), d'un électrolyte, et d'une poche (6) logeant les électrodes (10) et l'électrolyte, l'ensemble (2) comprenant en outre une poche supplémentaire (8) et une conduite (30) reliant la poche (6) à la poche supplémentaire (8).

## Description

La présente invention concerne les cellules de batterie et notamment le dégazage de cellules de batterie lors de leur formation.

En particulier, la présente invention a pour objet un ensemble comprenant une cellule de batterie et un procédé de récupération d'un ou plusieurs gaz émis lors de la formation d'une batterie, en particulier émis lors du cyclage de formation de la batterie au cours duquel la batterie subit plusieurs cycles de charge et de décharge.

Une cellule de batterie peut subir, lors de sa formation, au moins un cycle de charge et de décharge au cours duquel des gaz sont émis. Ces gaz peuvent engendrer des réactions parasites avec des matériaux de la cellule et dégrader la performance de la batterie, en particulier sa durabilité.

Afin de retirer les gaz émis, on effectue généralement une étape de dégazage de la cellule en environnement inerte, par exemple en boîte à gants sous gaz inerte, afin de garantir la sécurité de l'opérateur effectuant le dégazage.

La présente invention a donc pour objectif de pallier tout ou partie des inconvénients précités, d'améliorer la performance d'une cellule de batterie, et de simplifier l'opération de dégazage de la cellule de batterie.

La présente invention concerne un ensemble comprenant une cellule de batterie munie d'électrodes, d'un électrolyte, et d'une poche logeant les électrodes et l'électrolyte.

L'ensemble comprend en outre une poche supplémentaire et une conduite reliant la poche à la poche supplémentaire.

La poche et la poche supplémentaire communiquent uniquement par la conduite. Ainsi, les gaz émis par la cellule de batterie lors de sa formation peuvent s'écouler au travers de la conduite vers la poche supplémentaire, réduisant ainsi la quantité de gaz émis en contact avec les électrodes et l'électrolyte et donc les réactions parasites dégradant la performance et la durabilité de la cellule de batterie.

L'ensemble peut comprendre un dispositif anti-retour de fluide configuré pour permettre la circulation d'un fluide depuis la poche vers la poche supplémentaire et pour empêcher la circulation d'un fluide depuis la poche supplémentaire vers la poche.

Ainsi, les gaz émis dans la poche et circulant depuis la poche vers la poche supplémentaire au travers de la conduite sont prisonniers de la poche supplémentaire et ne peuvent pas dégrader les performances de la cellule de batterie.

Le dispositif anti-retour de fluide peut être agencé dans la poche supplémentaire.

La poche et la poche supplémentaire peuvent être liées entre elles par une portion plane à l'intérieur de laquelle s'étend la conduite.

Ladite portion plane peut s'étendre en saillie depuis un bord de la poche. Ladite portion plane peut s'étendre en saillie depuis un bord de la poche supplémentaire.

La poche et la poche supplémentaire peuvent être formées d'une feuille supérieure préformée et d'une feuille inférieure préformée jointes entre elles.

Les feuilles supérieure et inférieure préformées peuvent comprendre chacune de l'aluminium recouvert d'un film d'un matériau polymère.

L'aluminium constitue une couche de protection de la cellule de la batterie.

Les feuilles supérieure et inférieure préformées sont thermosoudées entre elles.

En particulier, le film en matériau polymère de la feuille supérieure préformée est thermosoudé au film en matériau polymère de la feuille inférieure préformée.

La conduite peut être formée d'un matériau polymère.

La conduite formée d'un matériau polymère peut être obstrué, notamment en soumettant la conduite à une température élevée, par exemple lors d'une opération de thermo-soudage. Il est alors possible de couper la conduite de sorte que la poche et la poche supplémentaire sont étanches. En particulier, cette opération ne nécessite pas l'usage d'un environnement inerte, et peut notamment être effectuée en salle anhydre.

La présente invention a également pour objet un procédé de récupération d'un gaz émis lors de la formation d'une batterie comprenant au moins les étapes suivantes :
- une étape de réalisation d'un ensemble comprenant une cellule de batterie munie d'électrodes, d'un électrolyte, et d'une poche logeant les électrodes et l'électrolyte, l'ensemble comprenant en outre une poche supplémentaire et une conduite reliant la poche à la poche supplémentaire ;
- une étape de cyclage de la cellule de batterie ; et
- une étape de découpe de la conduite de sorte que la poche est séparée de la poche supplémentaire et est étanche.

Ainsi, les gaz émis lors de la formation de la batterie et contenus dans la poche supplémentaire sont récupérés sans risques pour l'opérateur.

L'étape de réalisation de l'ensemble peut comprendre les étapes suivantes :
- une étape de formation de la poche au cours de laquelle une partie d'une feuille supérieure préformée est soudée, en particulier thermosoudée, à une partie d'une feuille inférieure préformée, les électrodes étant logées entre ladite partie de la feuille supérieure préformée et ladite partie de la feuille inférieure préformée, une première extrémité de la conduite débouchant entre ladite partie de la feuille supérieure préformée et ladite partie de la feuille inférieure préformée, une deuxième extrémité de la conduite s'étendant en direction d'une autre partie de la feuille supérieure préformée et d'une autre partie de la feuille inférieure préformée ;
- une étape d'injection de l'électrolyte dans la poche au travers de la conduite ;
- une étape de positionnement d'un dispositif anti-retour de fluide configuré pour permettre la circulation d'un fluide depuis la première extrémité de la conduite vers la deuxième extrémité de la conduite et pour empêcher la circulation d'un fluide depuis la deuxième extrémité de la conduite vers la première extrémité de la conduite ; et
- une étape de formation de la poche supplémentaire au cours de laquelle ladite autre partie de la feuille supérieure préformée est soudée, en particulier thermosoudée, à ladite autre partie de la feuille inférieure préformée, la deuxième extrémité de la conduite débouchant dans la poche supplémentaire.

Ladite partie de la feuille supérieure préformée et ladite autre partie de la feuille supérieure préformée sont complémentaires l'une de l'autre et forment la feuille supérieure préformée. Ladite partie de la feuille inférieure préformée et ladite autre partie de la feuille inférieure préformée sont complémentaires l'une de l'autre et forment la feuille inférieure préformée.

L'étape de formation de la poche peut comprendre l'insertion dans la conduite d'une tige métallique.

Ainsi, la conduite est protégée lors de la formation de la poche. La tige métallique est avantageusement retirée avant l'étape de formation de la poche supplémentaire.

Les gaz émis contenus par la poche supplémentaire peuvent ensuite être analysés pour vérifier le bon déroulement de la formation de la batterie, et ainsi vérifier que la batterie répond aux normes de qualité et de performance requises pour sa commercialisation.

### Brève description des dessins

La présente invention sera mieux comprise à l'étude de la description détaillée de modes de réalisation, pris à titre d'exemples nullement limitatifs et illustrés par les dessins annexés sur lesquels :
La figure 1 est une vue schématique d'un ensemble selon un exemple de réalisation de l'invention ;
La figure 2 est une vue en coupe de la figure 1 ;
La figure 3 est une vue de détail de la figure 2 ;
La figure 4 illustre schématiquement un procédé de récupération d'un gaz émis lors de la formation d'une batterie ;
Les figures 5 et 6 illustrent une étape de formation d'une poche selon un exemple de réalisation de l'invention ;
Les figures 7 et 8 illustrent une étape de thermo-soudure de la poche selon un exemple de réalisation de l'invention ; et
La figure 9 illustre une étape de découpe de l'ensemble selon un exemple de réalisation de l'invention.

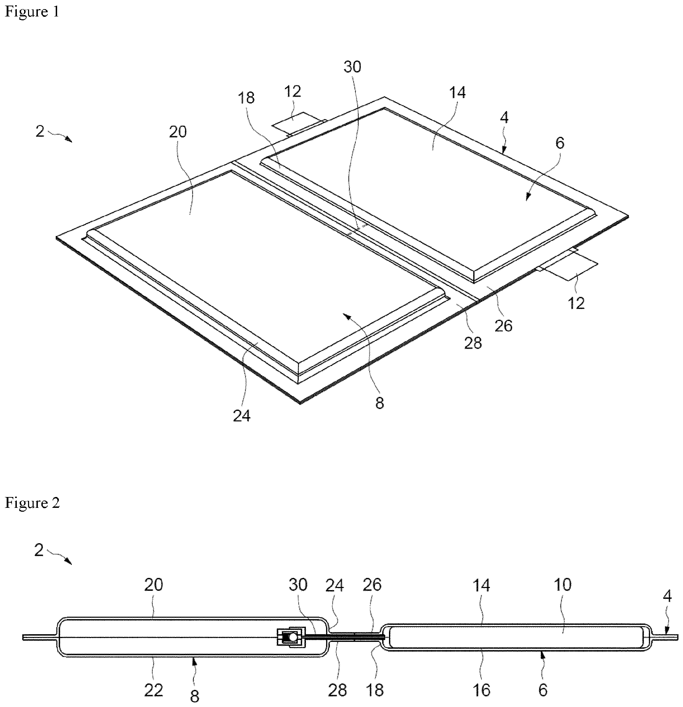

Les figures 1 à 3 représentent un ensemble 2 comprenant une cellule 4 de batterie munie d'une poche 6, et une poche supplémentaire 8. La poche 6 est destinée à stocker de l'énergie électrique. La poche supplémentaire 8 est destinée à permettre la récupération de gaz générés dans la poche 6, en particulier lors du cyclage de formation de la cellule 4 de batterie. La batterie est, par exemple, destinée à alimenter un véhicule automobile électrique.

La cellule 4 de batterie comprend des électrodes 10 et un électrolyte (non représenté) logés dans la poche 6, ainsi que deux collecteurs 12 de courants s'étendant chacun au travers d'une paroi de la poche 6.

Les électrodes 10 de la cellule 4 comprennent au moins une anode, par exemple composée de graphite, et au moins une cathode, par exemple composée d'un matériau à base de lithium ou de sodium. L'électrolyte est, par exemple, un électrolyte liquide ou polymère solide.

La poche 6 comprend une paroi supérieure 14 et une paroi inférieure 16 opposée à la paroi supérieure 14, ainsi que des bords périphériques 18 reliant les parois supérieure et inférieure 14, 16 de la poche 6 de manière à former intérieurement un espace.

La poche supplémentaire 8 comprend également une paroi supérieure 20 et une paroi inférieure 22 opposée à la paroi supérieure 20, ainsi que des bords périphériques 24 reliant les parois supérieure et inférieure 20, 22 de la poche supplémentaire 8 de manière à former intérieurement un espace.

L'ensemble 2 comprend une portion plane 26 s'étendant depuis les bords périphériques 18 de la poche 6 et une portion plane supplémentaire 28 s'étendant depuis les bords périphériques 24 de la poche supplémentaire 8. La portion plane 26 et la portion plane supplémentaire 28 forment un ensemble monobloc. Autrement dit, la portion plane 26 est venue de matière avec la portion plane supplémentaire 28.

L'ensemble 2 comprend en outre une conduite 30 reliant la poche 6 à la poche supplémentaire 8.

L'espace intérieur de la poche 6 et l'espace intérieur de la poche supplémentaire 8 communiquent fluidiquement uniquement au travers de la conduite 30.

Une première extrémité 32 de la conduite 30 s'étend au travers d'un bord périphérique 18 de la poche 6 et débouche dans l'espace intérieur de la poche 6. Une deuxième extrémité 34 de la conduite 30 opposée à la première extrémité 32 de la conduite 30 s'étend au travers d'un bord périphérique 24 de la poche supplémentaire 8 et débouche dans l'espace intérieur de la poche supplémentaire 8. La conduite 30 s'étend au travers de la paroi plane 26 et de la paroi plane supplémentaire 28.

La conduite 30 comprend, par exemple, une aiguille.

La conduite 30 est, par exemple, réalisée en un matériau polymère.

L'ensemble 2 comprend un dispositif anti-retour de fluide 36 permettant la circulation d'un fluide depuis la poche 6 vers la poche supplémentaire 8 et empêchant la circulation d'un fluide depuis la poche supplémentaire 8 vers la poche 6.

Le dispositif anti-retour de fluide 36 comprend ici un clapet anti-retour de fluide disposé dans l'espace intérieur de la poche supplémentaire 8.

La deuxième extrémité 34 de la conduite 30 présente une forme adaptée pour y fixer le clapet anti-retour de fluide.

Le clapet anti-retour de fluide comprend une bille et un ressort poussant la bille dans une position d'obturation de la conduite 30.

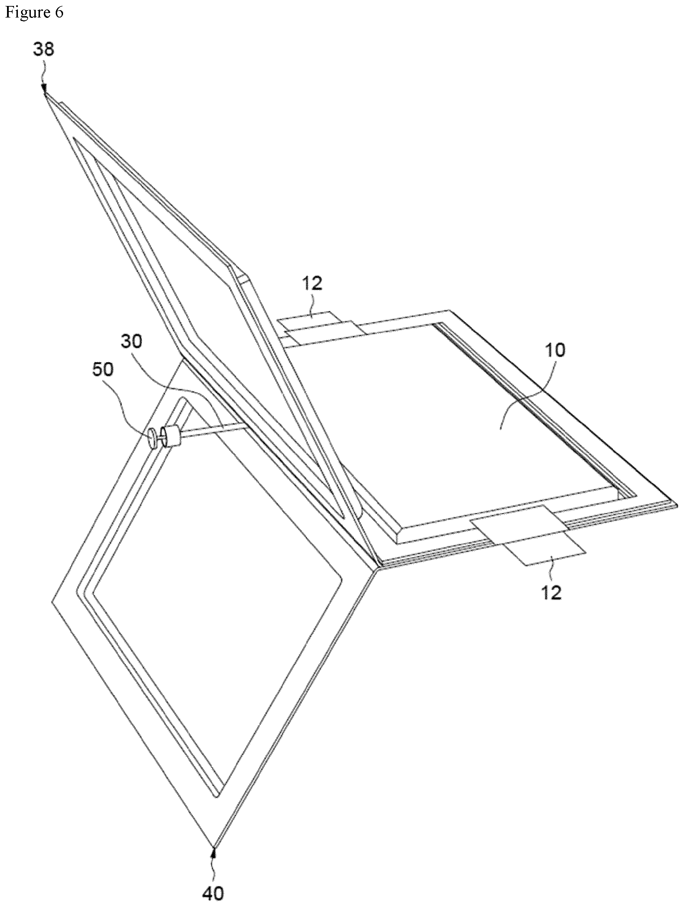

Comme détaillé par la suite, la poche 6 et la poche supplémentaire 8 sont formées d'une feuille supérieure préformée 38 et d'une feuille inférieure préformée 40 jointes entre elles (figure 6). Par exemple, les feuilles intérieure et supérieure préformées 38, 40 sont thermosoudées ensemble pour former la poche 6, la portion plane 26, la poche supplémentaire 8 et la portion plane supplémentaire 28.

Les feuilles supérieure et inférieure 38, 40 sont préformées de manière à donner la forme de l'ensemble 2 lors de l'assemblage de la feuille supérieure préformée 38 et de la feuille inférieure préformée 40.

Les feuilles supérieure et inférieure préformées 38, 40 sont avantageusement identiques l'une à l'autre.

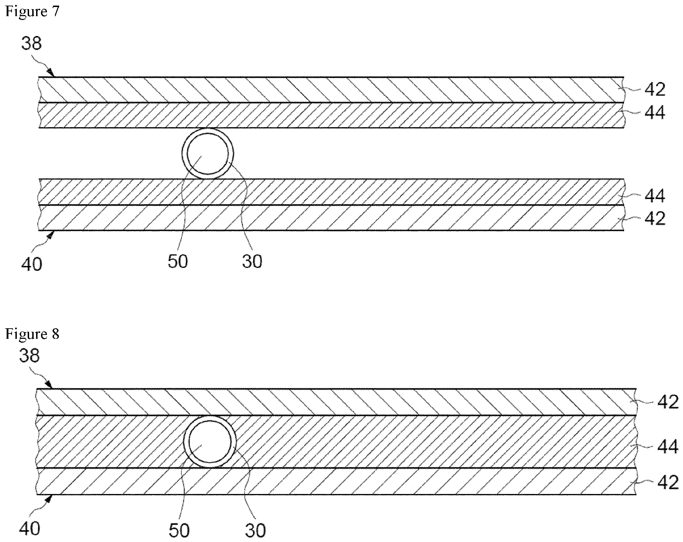

La feuille supérieure préformée 38 comprend (figure 7), par exemple, une feuille d'aluminium 42 recouverte, au moins sur sa face orientée vers la feuille inférieure préformée 40, par un film 44 d'un matériau polymère.

La feuille supérieure préformée 38 comprend une partie munie d'un renfoncement (non référencé) destiné à former en partie la poche 6, en particulier à former la paroi supérieure 14 de la poche 6, ainsi qu'une autre partie munie d'un renfoncement supplémentaire (non référencé) destiné à former en partie la poche supplémentaire 8, en particulier à former la paroi supérieure 20 de la poche supplémentaire 8.

La feuille inférieure préformée 40 comprend (figure 7), par exemple, une feuille d'aluminium 42 recouverte, au moins sur sa face orientée vers la feuille supérieure préformée 38, par un film 44 d'un matériau polymère.

La feuille inférieure préformée 40 comprend une partie munie d'un renfoncement (non référencé) destiné et à former en partie la poche 6, en particulier à former la paroi inférieure 16 de la poche 6, ainsi qu'une autre partie munie d'un renfoncement supplémentaire (non référencé) destiné à former en partie la poche supplémentaire 8, en particulier à former la paroi inférieure 22 de la poche supplémentaire 8.

Le renfoncement de la feuille inférieure préformée 40 est destiné à former la poche 6 de l'ensemble 2 conjointement avec le renfoncement de la feuille supérieure préformée 38. Le renfoncement supplémentaire de la feuille inférieure préformée 40 est destiné à former la poche supplémentaire 8 de l'ensemble 2 conjointement avec le renfoncement supplémentaire de la feuille supérieure préformée 38.

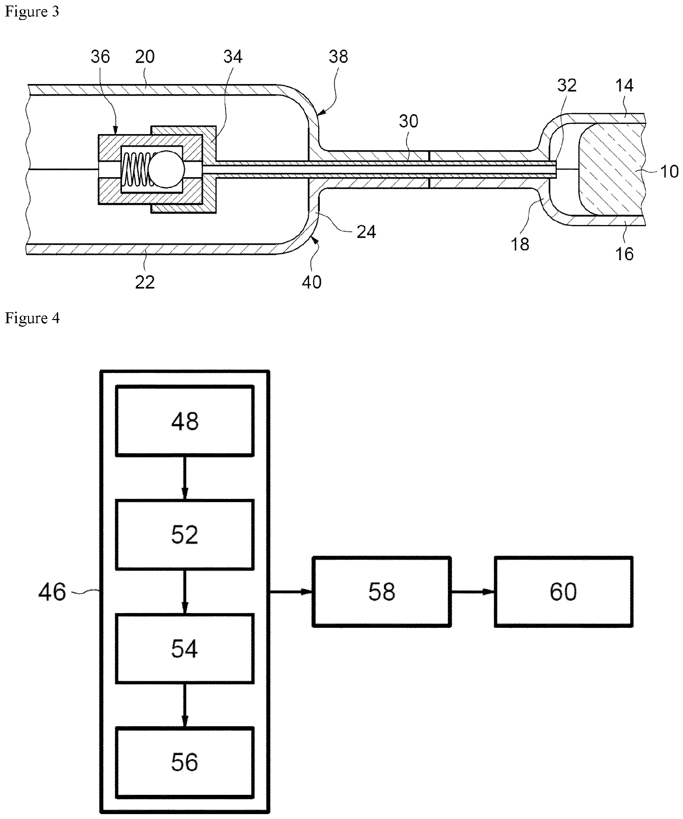

La figure 4 représente schématiquement un procédé de récupération d'un gaz émis lors de la formation de la cellule 4 de batterie. En particulier, ce gaz est émis lorsque, à la suite de la formation de la cellule 4 de batterie, celle-ci subit au moins un cycle de charge et de décharge pour stabiliser ses matériaux actifs et ainsi minimiser les réactions chimiques indésirables lors de cycles de charge et de décharge ultérieurs.

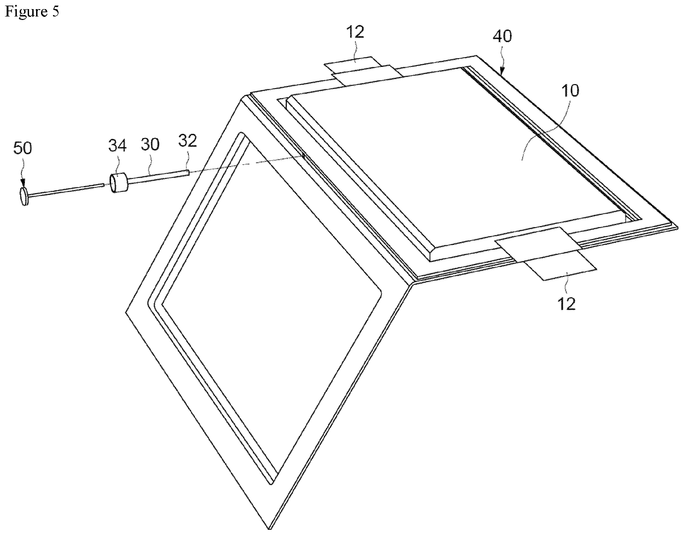

On commence par une étape 46 de réalisation de l'ensemble 2 comprenant une sous-étape 48 de formation de la poche 6 illustrée aux figures 5 à 9.

Au cours de la sous-étape 48 de formation de la poche 6, on positionne les électrodes 10 dans le renfoncement de la partie de la feuille inférieure préformée 40, on connecte les collecteurs 12 de courant aux électrodes 10, on positionne les collecteurs 12 de courant au contact d'un pourtour plan de la partie de la feuille inférieure préformée 40 prolongeant le renfoncement de la feuille inférieure préformée 40, les collecteurs 12 de courant étant agencés de part et d'autre des électrodes 10.

Puis, on positionne la conduite 30, de sorte que la première extrémité 32 de la conduite 30 est en regard des électrodes 10 et de sorte que la deuxième extrémité 34 de la conduite 30 est opposée aux électrodes 10 par rapport à la première extrémité 32 de la conduite 30.

Avantageusement, on insère une tige 50 métallique dans la conduite 30.

Puis, on amène un pourtour plan de la partie de la feuille supérieure préformée 38 prolongeant le renfoncement de la partie de la feuille supérieure préformée 38 au contact du pourtour de la partie de la feuille inférieure préformée 40 de sorte que les électrodes 10 sont logées dans la poche 6 formée par les renfoncements des feuilles supérieure et inférieure préformées 38, 40, de sorte que la première extrémité 32 de la conduite 30 débouche dans la poche 6 et de sorte que les collecteurs 12 de courant sont enserrés entre les feuilles supérieure et inférieure préformées 38, 40.

Enfin, on soude les parties des feuilles supérieure et inférieure préformées 38, 40, formant ainsi la portion plane 26. En particulier, on thermosoude la partie de la feuille supérieure préformée 38 à la partie de la feuille inférieure préformée 40 en chauffant les pourtours des renfoncements des feuilles supérieure et inférieure préformées 38, 40 de manière à les joindre. Par exemple, les films 44 en matériau polymère recouvrant les feuilles d'aluminium 42 des feuilles supérieure et inférieure préformées 38, 40 sont chauffés à une température supérieure à 160°C et fusionnent (figure 8). La tige 50 métallique, ayant protégé la conduite 30 pendant la thermo-soudure, est alors retirée.

On poursuit avec une sous-étape 52 d'injection de l'électrolyte dans la poche 6 au travers de la conduite 30.

Puis, on effectue une sous-étape 54 de positionnement du dispositif anti-retour de fluide 36. Par exemple, on insère le clapet anti-retour de fluide dans la deuxième extrémité 34 de la conduite 30 de forme adaptée.

Enfin, on effectue une sous-étape 56 de formation de la poche supplémentaire 8. On amène un pourtour plan de l'autre partie de la feuille supérieure préformée 38 prolongeant le renfoncement supplémentaire de l'autre partie de la feuille supérieure préformée 38 au contact d'un pourtour plan de l'autre partie de la feuille inférieure préformée 40 prolongeant le renfoncement supplémentaire de l'autre partie de la feuille inférieure préformée 40. Puis, on soude, en particulier on thermosoude, les autres parties des feuilles supérieure et inférieure préformées 38, 40, formant ainsi la portion plane supplémentaire 28.

On poursuit le procédé de récupération de gaz émis par une étape 58 de cyclage de la cellule 4 de batterie comprenant plusieurs cycles de charge et de décharge de la cellule 4 de la batterie. Les gaz sont alors générés dans la poche 6 puis évacués vers la poche supplémentaire 8 au travers de la conduite 30.

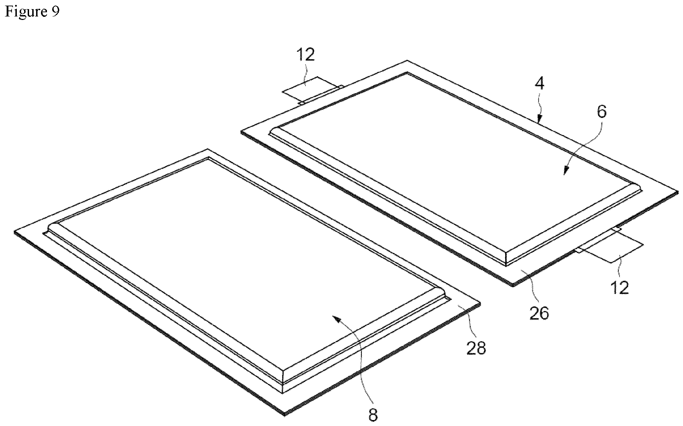

Enfin, on effectue une étape 60 de découpe de la conduite 30 de sorte que la poche 6 est séparée de la poche supplémentaire 8 et est étanche. Par exemple, on effectue le thermo-soudage de la portion plane 26 et de la portion plane supplémentaire 28 dans lesquels s'étend la conduite 30 de manière à obturer la conduite 30. Puis on utilise un appareil de découpe pour séparer les parties des feuilles supérieure et inférieure préformées 38, 40 des autres parties des feuilles supérieure et inférieure préformées 38, 40, la portion plane 26 étant alors séparée de la portion plane 28, comme illustré à la figure 9.

La poche supplémentaire 8 peut désormais être analysée pour vérifier le bon déroulement de la formation de la cellule 4 de batterie.

## Revendications

1. Ensemble (2) comprenant une cellule (4) de batterie munie d'électrodes (10), d'un électrolyte, et d'une poche (6) logeant les électrodes (10) et l'électrolyte, **caractérisé en ce qu'**il comprend en outre une poche supplémentaire (8) et une conduite (30) reliant la poche (6) à la poche supplémentaire (8).

2. Ensemble (2) selon la revendication 1, comprenant un dispositif anti-retour de fluide (36) configuré pour permettre la circulation d'un fluide depuis la poche (6) vers la poche supplémentaire (8) et pour empêcher la circulation d'un fluide depuis la poche supplémentaire (8) vers la poche (6).

3. Ensemble (2) selon l'une des revendications 1 et 2, dans lequel la poche (6) et la poche supplémentaire (8) sont liées entre elles par une portion plane (26, 28) à l'intérieur de laquelle s'étend la conduite (30).

4. Ensemble (2) selon l'une quelconque des revendications précédentes, dans lequel la poche (6) et la poche supplémentaire (8) sont formées d'une feuille supérieure préformée (38) et d'une feuille inférieure préformée (40) jointes entre elles.

5. Ensemble (2) selon la revendication 4, dans lequel les feuilles supérieure et inférieure préformées (38, 40) comprennent chacune de l'aluminium (42) recouvert d'un film (44) d'un matériau polymère.

6. Ensemble (2) selon l'une des revendications 4 et 5, dans lequel les feuilles supérieure et inférieure préformées (38, 40) sont thermosoudées entre elles.

7. Ensemble (2) selon l'une quelconque des revendications précédentes, dans lequel la conduite (30) est formée d'un matériau polymère.

8. Procédé de récupération d'un gaz émis lors de la formation d'une batterie, **caractérisé en ce qu'**il comprend les étapes suivantes :
- une étape (46) de réalisation d'un ensemble (2) comprenant une cellule (4) de batterie munie d'électrodes (10), d'un électrolyte, et d'une poche (6) logeant les électrodes (10) et l'électrolyte, l'ensemble (2) comprenant en outre une poche supplémentaire (8) et une conduite (30) reliant la poche (6) à la poche supplémentaire (8) ;
- une étape (58) de cyclage de la cellule (4) de batterie ; et
- une étape (60) de découpe de la conduite (30) de sorte que la poche (6) est séparée de la poche supplémentaire (8) et est étanche.

9. Procédé selon la revendication 8, dans lequel l'étape de réalisation de l'ensemble (2) comprend les étapes suivantes :
- une étape (48) de formation de la poche (6) au cours de laquelle une partie d'une feuille supérieure préformée (38) est soudée à une partie d'une feuille inférieure préformée (40), les électrodes (10) étant logées entre ladite partie de la feuille supérieure préformée (38) et ladite partie de la feuille inférieure préformée (40), une première extrémité (32) de la conduite (30) débouchant entre ladite partie de la feuille supérieure préformée (38) et ladite partie de la feuille inférieure préformée (40), une deuxième extrémité (34) de la conduite (30) s'étendant en direction d'une autre partie de la feuille supérieure préformée (38) et d'une autre partie de la feuille inférieure préformée (40) ;
- une étape (52) d'injection de l'électrolyte dans la poche (6) au travers de la conduite (30) ;
- une étape (54) de positionnement d'un dispositif anti-retour de fluide (36) configuré pour permettre la circulation d'un fluide depuis la première extrémité (32) de la conduite (30) vers la deuxième extrémité (34) de la conduite (30) et pour empêcher la circulation d'un fluide depuis la deuxième extrémité (34) de la conduite (30) vers la première extrémité (32) de la conduite (30) ; et
- une étape (56) de formation de la poche supplémentaire (8) au cours de laquelle ladite autre partie de la feuille supérieure préformée (38) est soudée à ladite autre partie de la feuille inférieure préformée (40), la deuxième extrémité (34) de la conduite (30) débouchant dans la poche supplémentaire (8).

10. Procédé selon la revendication 9, dans lequel l'étape (48) de formation de la poche (6) comprend l'insertion dans la conduite (30) d'une tige (50) métallique.
